(19) Europäisches Patentamt
European Patent Office
Office européen des brevets

(11) EP 0 509 832 B1

# (12) EUROPEAN PATENT SPECIFICATION

(45) Date of publication and mention of the grant of the patent:
**05.11.1997 Bulletin 1997/45**

(51) Int Cl.[6]: **C08L 67/00**, C08L 67/02, C08L 77/12

(21) Application number: **92303468.0**

(22) Date of filing: **16.04.1992**

## (54) Polyester resin composition

Polyesterharzzusammensetzung

Composition de résine de polyester

(84) Designated Contracting States:
**AT BE CH DE DK ES FR GB GR IT LI LU MC NL PT SE**

(30) Priority: **19.04.1991 JP 115532/91**

(43) Date of publication of application:
**21.10.1992 Bulletin 1992/43**

(73) Proprietor: **POLYPLASTICS CO. LTD.**
**Chuo-Ku Osaka-shi Osaka 541 (JP)**

(72) Inventor: **Horiuchi, Hiroo**
**Fuji-shi, Sizuoka (JP)**

(74) Representative: **Tebbit, Antony Hugh Edward et al**
**HYDE, HEIDE & O'DONNELL**
**10-12 Priests Bridge**
**London SW15 5JE (GB)**

(56) References cited:
**EP-A- 30 417**
**EP-A- 154 065**
**EP-A- 390 489**
**GB-A- 2 078 240**

- **MAKROMOLEKULARE CHEMIE, MACROMOLECULAR CHEMISTRY & PHYSICS, vol. 187, no. 10, 1986, Basel (CH); M. PRACELLA, pp. 2387-2400**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 509 832 B1

## Description

The present invention relates to a polyester resin composition. In particular, the present invention relates to a resin composition comprising a blend of a polyalkylene terephthalate having a specified melt viscosity and a liquid crystalline polyester.

Although liquid crystalline polyesters (LCP) are thermoplastic resins having various excellent properties such as high strength, high thermal resistance, low coefficient of contraction, low coefficient of linear expansion and high mouldability, they are expensive, thus being industrially disadvantageous.

Therefore, it has been attempted to blend LCP with another resin and polyalkylene terephthalates (PAT) such as polyethylene terephthalate and polybutylene terephthalate are thought to be hopeful resins for the blend.

However, a moulding produced by injection-moulding a polyester resin composition comprising a mere blend of LCP and PAT cannot retain the excellent properties of LCP, such as low coefficient of contraction, low coefficient of linear expansion and high thermal resistance, and the strength thereof is seriously impaired. Although the mechanism of such a phenomenon has not been fully elucidated, the inventors suppose that LCP is oriented and dispersed in the form of a filament having a diameter of the order of several tens of micrometres in the direction of its flow by the shear stress and elongation stress applied in the melt processing step, which is causative of the undesirable properties of the moulding.

After intensive investigations made for the purpose of obtaining a moulding material having excellent properties by solving the above-described problems, the inventors have found that in order to obtain a blend moulding having the excellent properties of LCP, LCP is required to form a continuous phase in the moulding and that a moulding comprising LCP and PAT having a melt viscosity in a specified range has excellent strength, coefficient of contraction, coefficient of linear expansion and thermal resistance close to those of LCP. The present invention has been completed on the basis of this finding.

Thus the present invention relates to a polyester resin composition comprising a liquid crystalline polyester (LCP) having a melt viscosity of 200 to 2,000 P (20 to 200 Pas) and a polyalkylene terephthalate (PAT) having a melt viscosity of 200 to 5,000 P (20 to 500 Pas) both measured at a shear rate of 1,000 $sec^{-1}$ at a melt processing temperature and the PAT having 2 to 6 carbon atoms in the alkylene chain thereof, the ratio of liquid crystalline polyester to polyalkylene terephthalate polyester being in the range 40/60 to 99/1 by weight, the ratio of such melt viscosity of the LCP, $MV_{LCP}$, to that of the PAT, $MV_{PAT}$, being in the range:

$$\frac{1}{3} < \frac{MV_{LCP}}{MV_{PAT}} < 3$$

and the liquid crystalline polyester forming a continuous phase in said polyester resin composition.

[Brief Description of the Drawings]

Fig. 1 is an electron photomicrograph of the structure of a section through a product according to the present invention after removal of PAT by dissolution.

Fig. 2 is an electron photomicrograph of the structure of a section through a product produced by a conventional process after removal of PAT by dissolution.

Fig. 3 is a schematic view of a resin product produced by kneading the blend composition of the present invention comprising LCP and PAT on an extruder and solidifying the resin extruded through the die by cooling.

Fig. 4 is a schematic view of a resin product produced by kneading an ordinary blend composition comprising LCP and PAT on an extruder and solidifying the resin extruded through the die by cooling.

[Detailed Description of the Invention]

The PAT to be used in the present invention is one having a melt viscosity of 200 to 5,000 P (20 to 500 Pas) at a shear rate of 1,000 $sec^{-1}$ at the melt processing temperature. The melt viscosity of the LCP used in the present invention also measured at a shear, rate of 1,000 $sec^{-1}$ at the melt processing temperature is limited to 200 to 2,000 P (20 to 200 Pas). Also in order to form a continuous LCP phase, the ratio of the melt viscosity at a shear rate of 1,000 $sec^{-1}$ at the melt processing temperature of the LCP, $MV_{LCP}$, to that of the PAT, $MV_{PAT}$, is in the range:

$$\frac{1}{3} < \frac{MV_{LCP}}{MV_{PAT}} < 3,$$

and is preferably in the range:

$$\frac{1}{2} < \frac{MV_{LCP}}{MV_{PAT}} < 2.$$

Generally in the extrusion blending and injection moulding steps, LCP in a molten blend resin under a shear stress does not form any continuous phase but is easily oriented in the form of a fibre having a, diameter of about several tens of micrometres even when it is used in a large amount.

After further investigations, however, the inventors have found that when the melt viscosities of LCP and PAT are each in a certain range, LCP forms a continuous phase and the moulding has a high strength and, in addition, the coefficient of contraction, coefficient of linear expansion and thermal resistance of them are close to those of LCP.

The term "continuous LCP phase" as used herein refers to a phase wherein PAT in the separated particle form is dispersed in LCP to form a two-phase structure as shown in Fig. 1, which is different from a structure in which LCP forms no continuous phase (Fig. 2).

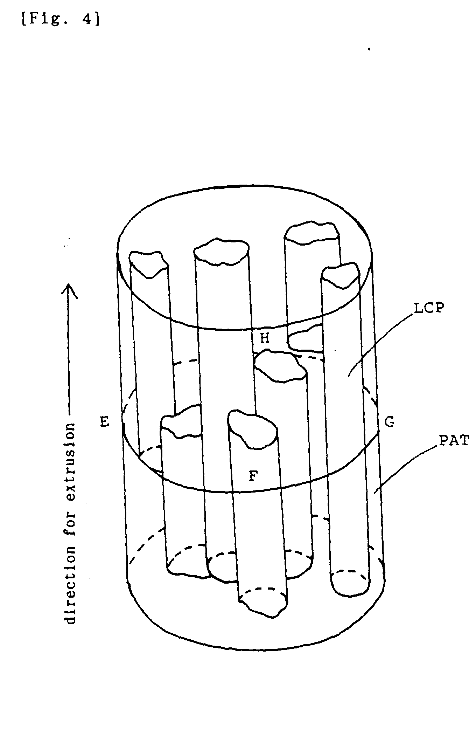

Figs. 3 and 4 are schematic views of resin products obtained by blending LCP and PAT on an extruder and solidifying the resin extruded through a die thereof by cooling, wherein Fig. 3 shows the product obtained from the resin composition of the present invention and Fig. 4 shows the one obtained from an ordinary resin composition.

Fig. 1 is an electron photomicrograph taken after removing PAT by dissolution from a section of the product shown in Fig. 3 obtained from the resin composition of the present invention. That section was obtained by cutting through the plane A, B, C, D in Fig. 3, and the section was immersed in HFIP (hexafluoroisopropyl alcohol) at ambient temperature for 24 h. In Fig. 1, there is shown a porous matrix representing a continuous phase of LCP and blank areas or pores which represent the removed PAT.

Fig. 2 is an electron photomicrograph taken after removing PAT by dissolution from a section of the product shown in Fig. 4 formed by a previously known process. That section was obtained by cutting through the plane E, F, G, H in Fig. 4, and that section was also immersed in HFIP (hexafluoroisopropyl alcohol) at ambient temperature for 24 h. In Fig. 2, there is shown a discontinuous phase of LCP and blank areas between the sections of LCP which represent the removed PAT.

The term "polyalkylene terephthalates" as used herein refers to saturated alkylene terephthalate polymers or copolymers obtained by the polycondensation of terephthalic acid with alkylenediol(s) having 2 to 6 carbon atoms in the alkylene chain as the main components. Preferred co-monomers include isophthalic acid, cyclohexanedimethanol, bisphenol A, 2,2-bis(β-hydroxyethoxyphenyl)propane and halogen-substituted products and esterforming derivatives of them. Polyalkylene terephthalate resins each having a branched structure containing a small amount of a polyfunctional monomer such as trimethylolpropane, pentaerythritol, trimellitic acid, pyromellitic acid, trimesic acid or an esterforming derivative thereof are also usable. The degree of polymerisation of the resin is not particularly limited so far as the resin has a viscosity within the above-described range and excellent mouldability. Particularly preferred examples of the polymers include polyalkylene terephthalate homopolymers and copolymers such as polybutylene terephthalate, polybutylene terephthalate/isophthalate copolymer, polyethylene terephthalate, polyethylene terephthalate/isophthalate copolymer polybutylene/cyclohexanedimethylene terephthalate copolymer, polycyclohexanedimethanol terephthalate and polycyclohexanedimethanol terephthalate/isophthalate copolymer. These polyalkylene terephthalates may be used either alone or in the form of a mixture of two or more of them.

The liquid crystalline polyesters to be used in the present invention are melt-processable polyesters having such properties that the polymer molecular chains are regularly arranged in parallel in a molten state. Such an oriented state of the molecule is often called "liquid crystalline state" or "nematic phase of liquid crystalline substance". These polymer molecules are usually slender and flat, have a considerably high rigidity along the major axis of the molecule, and usually have chain-extending bonds which are usually coaxial or in parallel with each other.

The properties of an anisotropic molten phase can be confirmed by the conventional polarimetry using crossed nicols. More specifically, the anisotropic molten phase can be confirmed by observing tie molten sample placed on a Leitz hot stage of a Leitz polarising microscope- at x40 magnification in a nitrogen atmosphere. When the polymer of the present invention is tested by placing it between crossed nicols, the polarised light is transmitted even in the molten static state to exhibit optical anisotropy.

The liquid crystalline polymers suitably used in the present invention tend to be substantially insoluble in ordinary solvents and, therefore, they are unsuitable for the solution process. However as described above, these polymers can be easily processed by an ordinary melt process.

The polymers forming the anisotropic molten phase in the present invention are preferably aromatic polyesters and aromatic polyesteramides. Polyesters partially comprising aromatic polyester and aromatic polyesteramide in the same molecular chain are also preferred.

Particularly preferred are liquid crystalline aromatic polyesters and liquid crystalline aromatic polyesteramides comprising att least one compound selected from the group consisting of aromatic hydroxy carboxylic acids, aromatic hydroxy amines and aromatic diamines as the constituent(s).

Specific examples thereof include:

1) polyesters mainly comprising one or more of the aromatic hydroxycarboxylic acids and derivatives thereof,
2) polyesters mainly comprising:

a) one or more of aromatic hydroxy carboxylic acids and derivatives of them,
b) one or more of aromatic dicarboxylic acids, alicyclic dicarboxylic acids and derivatives of them, and
c) one or more of aromatic diols, alicyclic diols, aliphatic diols and derivatives of them,

3) polyesteramides mainly comprising:

a) one or more of aromatic hydroxy carboxylic acids and derivatives of them,
b) one or more of aromatic hydroxy amines, aromatic diamines and derivatives of them, and
c) one or more of aromatic dicarboxylic acids, alicyclic dicarboxylic acids and derivatives of them, and

4) polyesteramides mainly comprising:

a) one or more of aromatic hydroxy carboxylic acids and derivatives of them,
b) one or more of aromatic hydroxy amines, aromatic diamines and derivatives of them,
c) one or more of aromatic dicarboxylic acids, alicyclic dicarboxylic acids and derivatives of them, and
d) one or more of aromatic diols, alicyclic diols, aliphatic diols and derivatives of them.

If necessary, the above-described constituents may be used in combination with a molecular weight modifier.

Preferred examples of the compounds constituting the liquid-crystalline polyesters include naphthalene compounds such as 2,6-naphthalenedicarboxylic acid, 2,6-dihydroxynaphthalene, 1,4-dihydroxynaphthalene and 6-hydroxy-2-naphthoic acid; biphenyl compounds such as 4,4'-diphenyldicarboxylic acid and 4,4'-dihydroxybiphenyl; compounds represented by the following general formulae (I), (II) and (III):

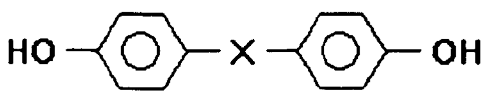

(I)

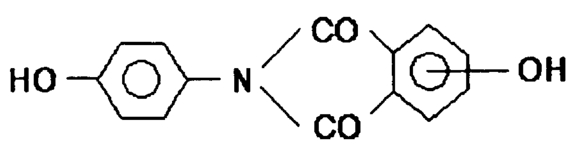

(II)

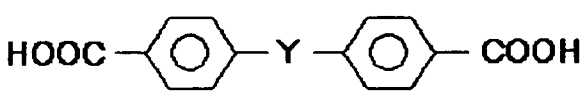

(III)

wherein X represents a group selected from among alkylenes (C I to C4), alkylidenes, -SO2-, -S- and -CO- and Y represents a group selected from among -$(CH2)_n$- (n being 1 to 4) and -$O(CH2)_n O$- (n being I to 4); benzene compounds having a substituent at the P-position, such as p-hydroxybenzoic acid, terephthalic acid, hydroquinone, p-aminophenol and P-phenylenediamine and corresponding benzene compounds having a substituent at the nucleus (the substituent being selected from among chlorine, bromine, methyl, phenyl and 1 -phenylethyl); and benzene compounds having a substituent at the m-position, such as isophthalic acid and resorcinol.

The liquid crystalline polyester to be used in the present invention may partially comprise a polyalkylene terephthalate forming no anisotropic molten phase in the molecular chain in addition to the above-described constituents. The alkyl group of this compound has 2 to 4 carbon atoms.

Among the above-described constituents, one or more compounds selected from among the naphthalene compounds, biphenyl compounds and p-substituted benzene compounds are still preferred as the indispensable constituent (s). Particularly preferred examples of the p-substituted benzene compounds include p-hydroxybenzoic acid, methylhydroquinone and 1-phenylethylhydroquinone.

Specific examples of the compounds having an ester-forming functional group usable as the constituents and the polyesters forming an anisotropic molten phase and preferably used in the present invention are described in Japanese Patent Publication No. 36633/1988.

The liquid crystalline polyesters preferably used in the present invention have a weight-average molecular weight of usually about 2,000 to 200,000, desirably about 10,000 to 50,000 and particularly about 20,000 to 25,000. The preferred aromatic polyesteramides have a molecular weight of usually about 5,000 to 50,000, desirably about 10,000 to 30,000, particularly 15,000 to 17,000. The molecular weight can be determined by gel permeation chromatography or other standard determination methods conducted without the formation of polymer solution, such as a method wherein terminal groups in a compression-moulded film are determined by infrared spectroscopy. In another method, the sample is dissolved-in pentafluorophenol and the molecular weight thereof is determined by the light scattering method.

When the aromatic polyester or polyesteramide is dissolved in pentafluorophenol at 60°C to obtain 0.1 weight % solution thereof, the solution usually has an inherent viscosity (I.V.) of at least about 2.0 dl/g, e.g. about 2.0 to 10.0 dl/g.

The amount of LCP in the blend composition of the present invention is 40 to 99%, preferably 50 to 99% and still preferably 60 to 99% by weight based on the whole composition.

The moulding produced from the blend composition of the present invention may contain various fibrous, powdery, granular or platy inorganic fillers.

The fibrous fillers include inorganic ones such as fibres of glass, asbestos, silica, silica/alumina, alumina, zirconia, boron nitride, silicon nitride, boron, potassium titanate and metal, e.g. stainless steel, aluminium, titanium, copper and brass.

The powdery or granular fillers include carbon black; graphite; silica; quartz powder; glass bead; milled glass fibre; glass balloon; glass powder; silicates such as calcium silicate, aluminium silicate, kaolin, talc, clay, diatomaceous earth and wollastonite; metal oxides such as iron oxide, titanium oxide, zinc oxide, antimony trioxide and alumina; metal carbonates such as calcium carbonate and magnesium carbonate; ferrite; silicon carbide; silicon nitride; boron nitride and various metal powders.

The platy fillers include mica, glass flake and various metal foils.

These inorganic fillers can be used either singly or in combination of two or more of them.

The fibrous fillers are particularly preferred in the present invention.

The inorganic filler can be used in the present invention in combination with a known surface treatment depending on the desired properties. Examples of the surface treatment include functional compounds such as epoxy compounds, isocyanate compounds, titanate compounds and silane compounds.

These fillers may be previously surface-treated or they may be added in the step of preparing the materials.

The amount of the inorganic filler to be added is 0 to 50% by weight based on the whole composition.

[Examples]

The following Examples will further illustrate the present invention, which by no means limit the invention.

Examples 1 to 5 and Comparative Examples 1 to 7

Polyethylene terephthalate having a melt viscosity as specified in the attached table, a liquid crystalline polyester A or B which will be described below and a glass fibre each in an amount as specified in the table were kneaded together on a twin-screw extruder to obtain a polyester resin composition.

To examine the dispersion state of LCP in the polyester resin composition, a filament extruded through the die of the extruder was cut perpendicularly to the longitudinal direction thereof and the section thereof was immersed in HFIP at ambient temperature for 24 h to dissolve and remove PAT. The sample thus obtained was observed under an electron microscope at x600 magnification to examine whether it formed a continuous phase or not. The tensile strength (TS) and heat distortion temperature (HDT) of the sample were also determined according to ASTM D 638 and ASTM D 648. The results are given in Table 1.

Examples 6 to 8 and Comparative Examples 8 to 11

The same procedure as that described above was repeated except that polybutylene terephthalate was used as the polyalkylene terephthalate. The results are given in Table 2.

The liquid crystalline polyesters used in the

Examples comprised the following constituent units:

A: 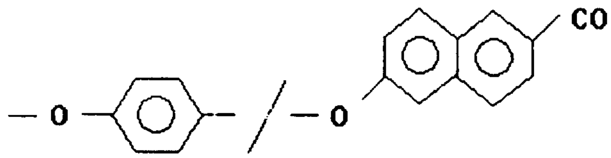 = 70 / 30

B: 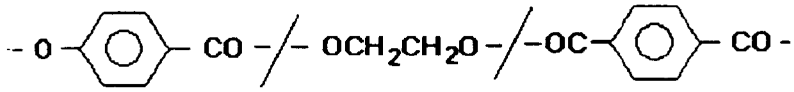

= 60 / 20 / 20

(the figures described above mean a molar ratio)

TABLE 1

| | Example | | | | | Comparative Example | | | | | | |
|---|---|---|---|---|---|---|---|---|---|---|---|---|
| | 1 | 2 | 3 | 4 | 5 | 1 | 2 | 3 | 4 | 5 | 6 | 7 |
| Kind of PAT | PET | PET | PET | PET | PET | - | - | PET | PET | PET | PET | PET |
| Melt viscosity of PAT * poise | 800 | 1500 | 800 | 800 | 800 | - | - | 800 | 800 | 100 | 100 | 1500 |
| Pas | 80 | 150 | 80 | 80 | 80 | - | - | 80 | 80 | 10 | 10 | 150 |
| Kind of LCP | A | A | A | A | B | A | A | A | A | A | A | B |
| Melt viscosity of LCP * poise | 800 | 800 | 800 | 800 | 400 | 800 | 800 | 800 | 800 | 800 | 800 | 400 |
| Pas | 80 | 80 | 80 | 80 | 40 | 80 | 80 | 80 | 80 | 80 | 80 | 40 |
| $MV_{LCP}/MV_{PAT}$ | 1 | 0.53 | 1 | 1 | 0.5 | — | — | 1 | 1 | 8 | 8 | 0.27 |
| PAT (wt%) | 30 | 30 | 50 | 21 | 30 | 0 | 0 | 100 | 70 | 30 | 21 | 30 |
| LCP (wt%) | 70 | 70 | 50 | 49 | 70 | 100 | 70 | 0 | 0 | 70 | 49 | 70 |
| GF (wt%) | 0 | 0 | 0 | 30 | 0 | 0 | 30 | 0 | 30 | 0 | 30 | 0 |
| Continuous phase of LCP | yes | yes | yes | yes | yes | - | - | - | - | no | no | no |
| TS ($kgf/cm^2$) | 1600 | 1700 | 1300 | 1600 | 1500 | 2100 | 2100 | 500 | 1200 | 600 | 1300 | 600 |
| MPa | 157 | 167 | 127 | 157 | 147 | 206 | 206 | 49 | 118 | 59 | 127 | 59 |
| HDT (°C) | 190 | 190 | 180 | 235 | 170 | 190 | 240 | 90 | 220 | 160 | 225 | 150 |

* The melt viscosities of PAT and LCP were determined at the melt processing temperature (290°C) at a shear rate of 1000 $sec^{-1}$.

TABLE 2

| | Example | | | Comparative Example | | | |
|---|---|---|---|---|---|---|---|
| | 6 | 7 | 8 | 8 | 9 | 10 | 11 |
| Kind of PAT | PBT | PBT | PBT | PBT | PBT | PBT | PBT |
| Melt viscosity of PAT * poise | 500 | 1200 | 500 | 500 | 500 | 100 | 100 |
| Pas | 50 | 120 | 50 | 50 | 50 | 10 | 10 |
| Kind of LCP | A | A | A | - | - | A | - |
| Melt viscosity of LCP * () poise | 800 | 800 | 800 | - | - | 800 | - |
| Pas | 80 | 80 | 80 | - | - | 80 | - |
| $MV_{LCP}/MV_{PAT}$ | 1.6 | 0.67 | 1.6 | – | – | 8 | – |
| PAT (wt%) | 30 | 30 | 21 | 100 | 70 | 30 | 21 |
| LCP (wt%) | 70 | 70 | 49 | - | - | 70 | 49 |
| GF (wt%) | 0 | 0 | 30 | 0 | 30 | 0 | 30 |
| Continuous phase of LCP | yes | yes | yes | - | - | no | no |
| TS ($kgf/cm^2$) | 1500 | 1700 | 1500 | 500 | 1300 | 600 | 900 |
| MPa | 147 | 167 | 147 | 49 | 127 | 59 | 88 |
| HDT (°C) | 190 | 190 | 235 | 80 | 210 | 150 | 220 |

* The melt viscosities of PAT and LCP were determined at the melt processing temperature (290°C) at a shear rate of 1000 $sec^{-1}$.

## Claims

1. A polyester resin composition comprising a liquid crystalline polyester (LCP) having a melt viscosity of 200 to 2,000 P (20 to 200 Pas) and a polyalkylene terephthalate (PAT) having a melt viscosity of 200 to 5,000 P (20 to 500 Pas) both measured at a shear rate of 1,000 $sec^{-1}$ at a melt processing temperature and the PAT having 2 to 6 carbon

atoms in the alkylene chain thereof, the ratio of liquid crystalline polyester to polyalkylene terephthalate polyester being in the range 40/60 to 99/1 by weight, the ratio of such melt viscosity of the LCP, $MV_{LCP}$, to that of the PAT, $MV_{PAT}$, being in the range:

$$\frac{1}{3} < \frac{MV_{LCP}}{MV_{PAT}} < 3$$

and said liquid crystalline polyester forming a continuous phase in said polyester resin composition.

**2.** A polyester resin composition according to Claim 1, wherein the ratio of the melt viscosity (P) at a shear rate of 1,000 $sec^{-1}$ at the melt processing temperature of the liquid crystalline: polyester, $MV_{LCP}$, to that of the polyalkylene terephthalate, $MV_{PAT}$, is in the following range:

$$\frac{1}{2} < \frac{MV_{LCP}}{MV_{PAT}} < 2.$$

**3.** A polyester resin composition according to Claim 1 or 2, which further contains 0 to 50% by weight, based on the whole composition, of an inorganic filler.

**4.** A polyester resin composition according to any of Claims 1 to 3, wherein said liquid crystalline polyester comprises an aromatic polyester and/or an aromatic polyesteramide.

**5.** A polyester resin composition according to Claim 4, wherein said liquid crystalline polyester comprises recurring segments derived from at least one compound selected from the group consisting of aromatic hydroxy carboxylic acids, aromatic hydroxy amines and aromatic diamines.

**6.** A polyester resin composition according to Claim 5, wherein said liquid crystalline polyester comprises recurring segments derived from at least one compound selected from the group consisting of:
naphthalene compounds; biphenyl compounds.; compounds represented by the following general formulae (I), (II) and (III):

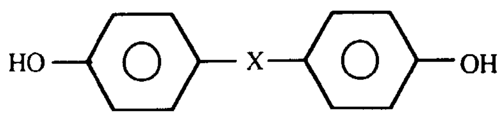

(I)

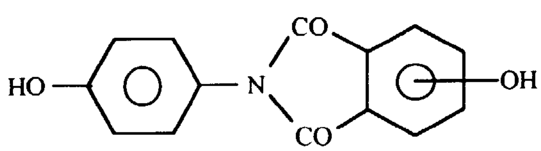

(II)

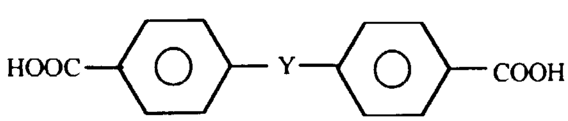

(III)

wherein X represents a group selected, from among alkylenes ($C_1$ to $C_4$), alkylidenes, $-SO_2-$, -S- and -CO-, and
Y represents a group selected from among $-(CH_2)_n$,- (n being 1 to 4) and $-O(CH_2)_nO-$ (n being l to 4); benzene compounds having a substituent at the P-position and corresponding benzene compounds having a substituent at the nucleus (the substituent being selected from among chlorine, bromine, methyl, phenyl and 1 -phenylethyl); and benzene compounds having a substituent at the m-position.

7. A polyester resin composition according to any of Claims 1 to 6, wherein said liquid crystalline polyester comprises an aromatic polyester having a weight-average molecular weight of 2,000 to 200,000, desirably 10,000 to 50,000 and most preferably of 20,000 to 25,000.

8. A polyester resin composition according to any of Claims 1 to 7, wherein said liquid crystalline polyester comprises an aromatic polyesteramide having a molecular weight of 5,000 to 50,000, desirably 10,000 to 30,000, and most preferably of 15,000 to 17,000.

**Patentansprüche**

1. Polyesterharzzusammensetzung, die einen flüssigkristallinen Polyester (LCP) mit einer Schmelzviskosität von 200 bis 2000 p (20 bis 200 Pa·s) und ein Polyalkylenterephthalat (PAT) mit einer Schmelzviskosität von 200 bis 5000 p (20 bis 500 Pa·s), beides bei einer Schergeschwindigkeit von 1000 $s^{-1}$ bei der Schmelzverarbeitungstemperatur gemessen, umfaßt, wobei das PAT 2 bis 6 Kohlenstoffatome in seiner Alkylenkette aufweist, wobei das Verhältnis von flüssigkristallinem Polyester zu Polyalkylenterephthalat-Polyester im Bereich von 40/60 bis 99/1 Gewichtsteilen liegt, wobei das Verhältnis der Schmelzviskosität des LCP, $MV_{LCP}$, zu der des PAT, $MV_{PAT}$, im Bereich

$$\frac{1}{3} < \frac{MV_{LCP}}{MV_{PAT}} < 3$$

liegt und der flüssigkristalline Polyester eine kontinuierliche Phase in der Polyesterharzzusammensetzung bildet.

2. Polyesterharzzusammensetzung gemäß Anspruch 1, wobei das Verhältnis der Schmelzviskosität (p) bei einer Schergeschwindigkeit von 1000 $s^{-1}$ bei der Schmelzverarbeitungstemperatur des flüssigkristallinen Polyesters, $MV_{LCP}$, zu der des Polyalkylenterephthalats, $MV_{PAT}$, im folgenden Bereich liegt:

$$\frac{1}{2} < \frac{MV_{LCP}}{MV_{PAT}} < 2.$$

3. Polyesterharzzusammensetzung gemäß Anspruch 1 oder 2, die weiterhin 0 bis 50 Gew.-%, bezogen auf die gesamte Zusammensetzung, eines anorganischen Füllstoffs enthält.

4. Polyesterharzzusammensetzung gemäß einem der Ansprüche 1 bis 3, wobei der flüssigkristalline Polyester einen aromatischen Polyester und/oder ein aromatisches Polyesteramid umfaßt.

5. Polyesterharzzusammensetzung gemäß Anspruch 4, wobei der flüssigkristalline Polyester sich wiederholende Segmente umfaßt, die von wenigstens einer Verbindung abgeleitet sind, die aus der Gruppe ausgewählt ist, die aus aromatischen Hydroxycarbonsäuren, aromatischen Hydroxyaminen und aromatischen Diaminen besteht.

6. Polyesterharzzusammensetzung gemäß Anspruch 5, wobei der flüssigkristalline Polyester sich wiederholende Segmente umfaßt, die von wenigstens einer Verbindung abgeleitet sind, die aus der Gruppe ausgewählt ist, die aus Naphthalinverbindungen, Biphenylverbindungen, Verbindungen, die durch die folgenden allgemeinen Formeln (I), (II) und (III) dargestellt werden:

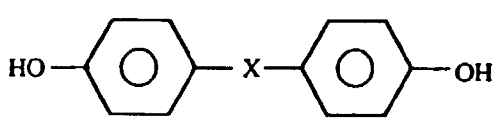

(I)

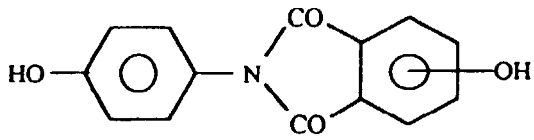

(II)

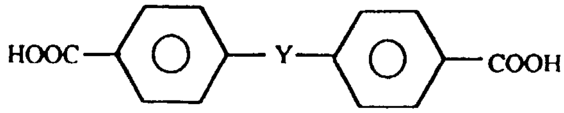

(III)

wobei X eine Gruppe darstellt, die aus Alkylenen ($C_1$ bis $C_4$), Alkylidenen, -$SO_2$-, -S- und -CO- ausgewählt ist, und Y eine Gruppe darstellt, die aus -$(CH_2)_n$- (wobei n 1 bis 4 beträgt) und -$O(CH_2)_nO$- (wobei n 1 bis 4 beträgt) ausgewählt ist,
Benzolverbindungen mit einem Substituenten in der p-Position und entsprechenden Benzolverbindungen mit einem Substituenten am Kern (wobei der Substituent aus Chlor, Brom, Methyl, Phenyl und 1-Phenylethyl ausgewählt ist) sowie Benzolverbindungen mit einem Substituenten in der m-Position besteht.

**7.** Polyesterharzzusammensetzung gemäß einem der Ansprüche 1 bis 6, wobei der flüssigkristalline Polyester einen aromatischen Polyester mit einem Gewichtsmittel des Molekulargewichts von 2000 bis 200 000, wünschenswerterweise 10 000 bis 50 000 und am meisten bevorzugt 20 000 bis 25 000 umfaßt.

**8.** Polyesterharzzusammensetzung gemäß einem der Ansprüche 1 bis 7, wobei der flüssigkristalline Polyester ein aromatisches Polyesteramid mit einem Molekulargewicht von 5000 bis 50 000, wünschenswerterweise 10 000 bis 30 000 und am meisten bevorzugt 15 000 bis 17 000 umfaßt.

**Revendications**

**1.** Une composition de résine polyester comprenant un polyester à cristaux liquides (LCP) ayant une viscosité à l'état fondu de 20 à 200 Pa.s et un poly(téréphtalate d'alkylène) (PAT) ayant une viscosité à l'état fondu de 20 à 500 Pa.s, ces viscosités étant toutes deux mesurées sous un taux de cisaillement de 1000 $s^{-1}$ à une température de traitement à l'état fondu et le PAT ayant 2 à 6 atomes de carbone dans la chaîne alkylène de celui-ci, le rapport pondéral du polyester à cristaux liquides au polyester poly(téréphtalate d'alkylène) se situant dans l'intervalle de 40/60 à 99/1, le rapport de la viscosité à l'état fondu du LCP, $MV_{LCP}$, à celle du PAT, $MV_{PAT}$, étant supérieur à 1/3 mais inférieur à 3, et ledit polyester à cristaux liquides formant une phase continue dans ladite composition de résine polyester.

**2.** Une composition de résine polyester selon la revendication 1 dans laquelle le rapport de la viscosité à l'état fondu (P) sous un taux de cisaillement de 1000 $s^{-1}$ à la température de traitement à l'état fondu du polyester à cristaux liquides, $MV_{LCP}$, à celle du poly(téréphtalate d'alkylène), $MV_{PAT}$, est supérieur à 1/2 mais inférieur à 2.

**3.** Une composition de résine polyester selon la revendication 1 ou 2, qui renferme en outre 0 à 50 % en poids, sur la base de l'ensemble de la composition, d'une charge minérale.

**4.** Une composition de résine polyester selon l'une quelconque des revendications 1 à 3, dans laquelle ledit polyester à cristaux liquides comprend un polyester aromatique et/ou un polyesteramide aromatique.

**5.** Une composition de résine polyester selon la revendication 4, dans laquelle ledit polyester à cristaux liquides comprend des segments répétitifs dérivant d'au moins un composé choisi dans le groupe formé par les acides hydroxycarboxyliques aromatiques, les hydroxyamines aromatiques et les diamines aromatiques.

**6.** Une composition de résine polyester selon la revendication 5 dans laquelle ledit polyester à cristaux liquides comprend des segments répétitifs dérivant d'au moins un composé choisi dans le groupe formé par : les composés naphtaléniques, les composés biphényliques et les composés représentés par les formules générales (I), (II) et (III) suivantes:

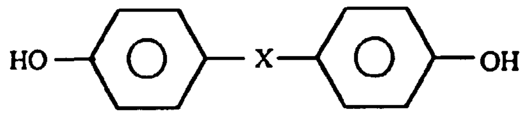

(I)

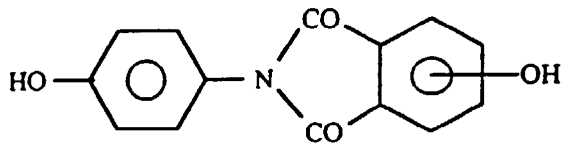

(II)

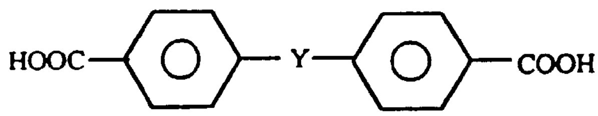

(III)

où X représente un groupe choisi parmi les groupes alkylènes en $C_1$ à $C_4$, alkylidènes, $-SO_2-$, -S- et -CO-, et

Y représente une groupe choisi parmi $-(CH_2)_n-$, où n vaut 1 à 4, et $-O(CH_2)_nO-$, où n vaut 1 à 4 ; les composés benzéniques portant un substituant en position para et les composés benzéniques correspondants portant un substituant sur le noyau (le substituant étant choisi parmi le chlore, le brome et les groupes méthyle, phényle et 1-phényléthyle) ; et les composés benzéniques portant un substituant en position méta.

**7.** Une composition de résine polyester selon l'une quelconque des revendications 1 à 6 dans laquelle ledit polyester à cristaux liquides comprend un polyester aromatique ayant un poids moléculaire moyen en poids de 2000 à 200 000, désirablement de 10 000 à 50 0000 et le plus souhaitablement de 20 000 à 25 000.

**8.** Une composition de résine polyester selon l'une quelconque des revendications 1 à 7 dans laquelle ledit polyester à cristaux liquides comprend un polyesteramide aromatique ayant un poids moléculaire de 5000 à 50 000, désirablement de 10 000 à 30 0000 et le plus souhaitablement de 15 000 à 17 000.

Fig. 1

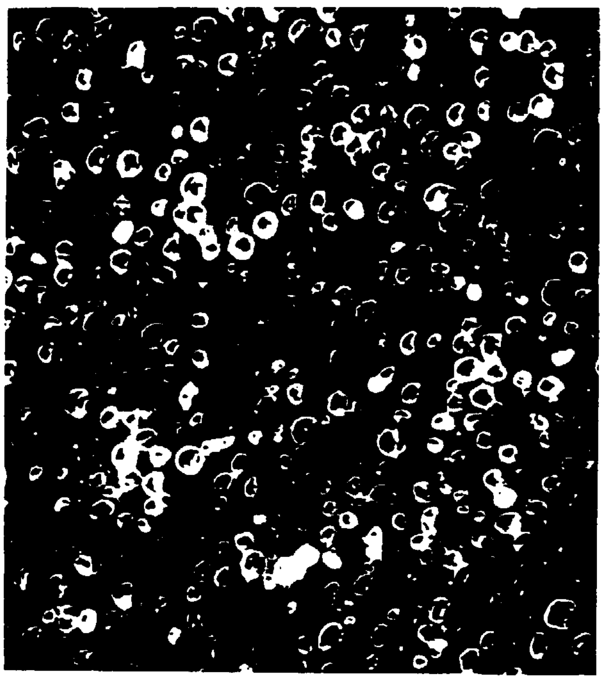

[Fig. 2]

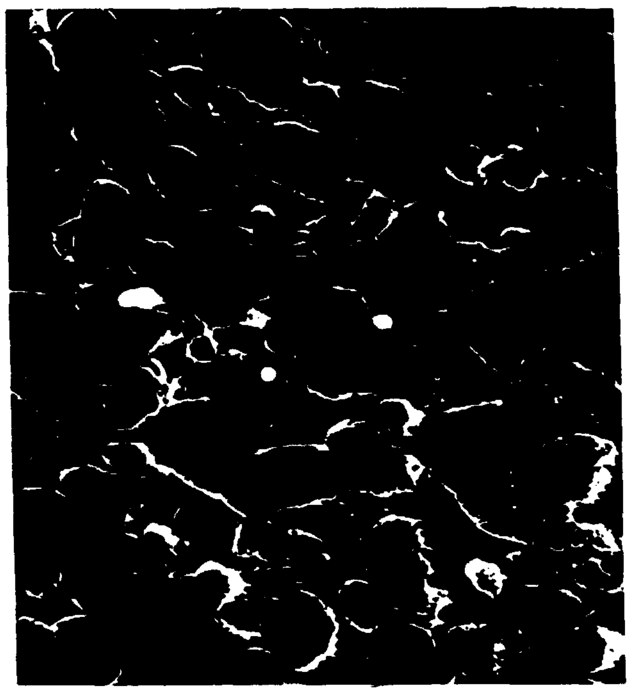

[Fig. 3]

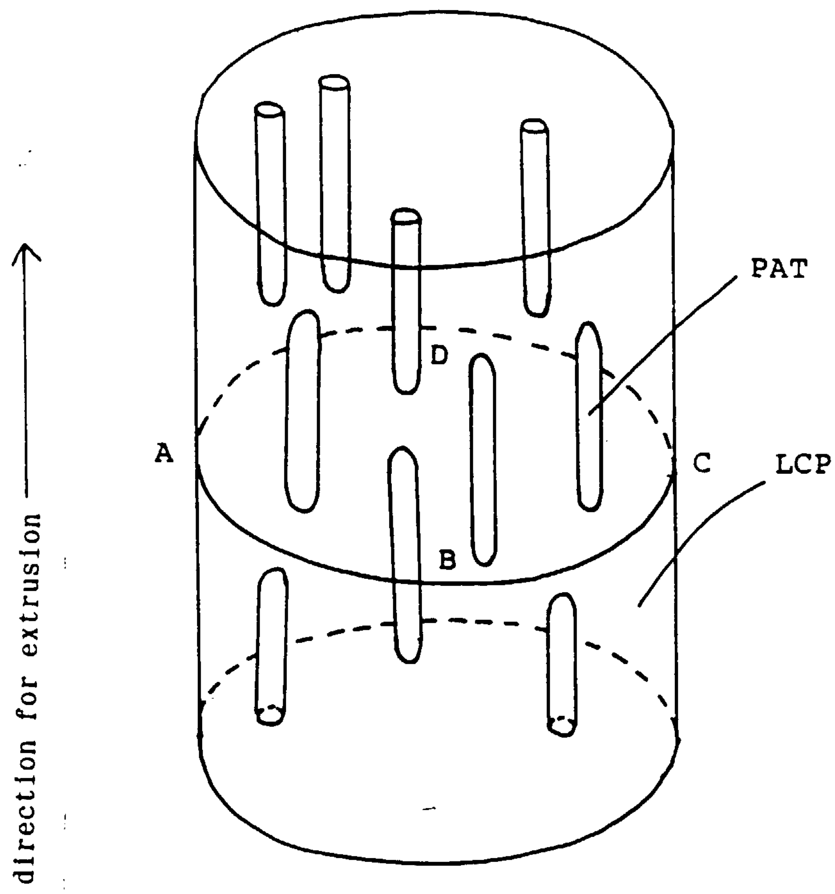

[Fig. 4]